# EUROPEAN PATENT APPLICATION

(11) **EP 3 412 626 A1**
(43) Date of publication of application: **12.12.2018**
(21) Application number: 16889176.0
(22) Date of filing: 01.02.2016
(51) Int. Cl.: B82Y 40/00, B82Y 30/00, B02C 17/20, C04B 35/626

(54) **METHOD FOR OBTAINING A GRAPHENE PRODUCT, GRAPHENE PRODUCT AND USE THEREOF**

(71) Applicant: Eficiencia Energética Aplicada, S.L., 50018 Zaragoza (ES)
(72) Inventor: QUISPE APACLLA, César Jesús, 50018 Zaragoza (ES); GONZÁLEZ BERMÚDEZ, Lucía, 50018 Zaragoza (ES); MARTÍN VELASCO, Pedro Julián, 50018 Zaragoza (ES)
(74) Representative: Ungria López, Javier
(86) International application number: PCT/ES2016/070058
(87) International publication number: WO 2017/134316

(57) **Abstract**

The invention relates to a method for obtaining a graphene product and to the use thereof, the method being based on thermal mechanical exfoliation of graphite by means of a specifically designed self-rotating screw (2) and balls of material with defined dimensions, the screw being inserted into a leaktight chamber (1) having a controlled environment. The graphite and balls are rotated dry, the balls acquiring high centrifugal force on the internal walls of the leaktight chamber and reaching ideal internal temperatures, so that graphite exfoliation takes place in this zone at nanometric level. The graphene material obtained is extracted and filtered by means of a continuous vacuum system. This method allows the production of a pure homogeneous graphene material and, in turn, selection by sizes, to obtain a material with optimal properties for each type of use.

## Description

### OBJECT OF THE INVENTION

The present invention, as expressed in the present specification, relates to a method for obtaining a graphene product and to the use thereof, the method being based on thermal mechanical exfoliation of graphite by means of a specifically designed self-rotating screw and balls of material with defined dimensions, the screw being inserted into a leaktight chamber having a controlled environment. The graphite and balls are rotated dry, the balls acquiring high centrifugal force on the internal walls of the leaktight chamber and reaching ideal internal temperatures, so that graphite exfoliation takes place in this zone at nanometric level. Then, the graphene material obtained is extracted and filtered by means of a continuous vacuum system.

Thus, the essential object is obtaining a good-quality, pure homogeneous graphene material and, in turn, selection by sizes thereof to obtain a material with optimal properties for each type of use by means of a scalable, non-polluting and eco-friendly method.

### FIELD OF APPLICATION

The present specification describes a graphene product for application in polymers, resins, silicones, paints, inks, textiles, paraffins or any other type of material (including biological materials) to improve the properties thereof (for example: anti-friction, antioxidant and anti-static properties, ultraviolet stabilizers, electrical conductivity, mechanical resistance, lower weight, flame retardant properties, chemical resistance...) with respect to the initial properties of such materials. The graphene product can likewise be used as a substitute of additives to the extent it is less polluting, and in the recycling of thermoplastic polymers, where the graphene material maintains the properties of the matrix and even reinforces them.

### BACKGROUND OF THE INVENTION

At present, nanotechnology is making significant scientific advances thanks to technological progress in terms of instruments, equipment and laboratories.

Particle size and other dimensional components, such as layers, of nanostructured materials are found in the nanometre range and determine the properties of the material and the dimensions of these nanostructured elements. Graphene is a widely used nanostructured material having a two-dimensional structure, consisting of highly cohesive carbon atoms in a one-atom wide surface.

Within the field of nanotechnology, graphene has received significant worldwide interest thanks to its exceptional electronic, mechanical and chemical properties that make it a unique material, and it is being called the material of the future in various fields of application. The most outstanding of these properties are the following: a) high thermal conductivity; b) high electrical conductivity, as the electrons present in graphene are highly mobile and move at almost the speed of light with little resistance; c) high elasticity and hardness, as it is the most resistant material known; d) high aspect ratio, as graphene sheets have the thickness of one atom (0.2 nm), while the dimensions in the plane can be more than 1000 times larger; this makes graphene very light, like carbon fibre, but more flexible; e) it can be transparent, as one layer of graphene transmits light by 98%; f) chemical reactivity, as it can react chemically with other substances to form compounds with different properties.

The influence of the manufacturing parameters on the structure is very important, and, thus, the lateral dimensions of the graphene material influence the mechanical properties; the shape of the particles determines the properties of the mixture; the thickness and number of layers determines the manufacturing cost, the electrical and mechanical properties and the possibilities of manipulation and subsequent processing of the obtained material, etc.

The term graphene refers to a two-dimensional monolayer with a hexagonal lattice structure formed by carbon atoms. In the present invention, the term graphene product or graphene material is used to indicate that the material referred to may contain more than one layer, and in fact it may be a bilayer material or have up to 30 layers. Furthermore, it may have some other surface modification, such as oxygen groups (the material may have up to a proportion of 7% O, 3% N, 90% C), in addition to the carbon composition.

Currently, there is a divergence of criteria in the use of the term graphene to designate all types of materials related to graphene, ranging from monolayer to multilayer materials with different degrees of oxidation and/or functionalization. To avoid confusion when referring to this material, there have been attempts to develop different measuring methods with the purpose of more accurately characterizing the material referred to, although there are still ongoing discussions in this regard among the scientific community. The European Graphene Flagship projects have included this field as one of their items.

For the moment, one of the ways to characterize this material is by using its surface area, and assuming that the monolayer has a surface area of 2600 m²/gr, surface areas provide an idea as to the degree of exfoliation of our material. Raman spectroscopy, among other techniques, is also used to reference the average number of layers of our graphene.

It is being said that this material might even bring a new industrial revolution thanks to the extraordinary properties that can be obtained by incorporating graphene and/or a graphene product into composite materials, and its potential in multiple uses.

At present, there are several methods of producing graphene and/or graphene products, and each one will result in a material with unique properties. With these techniques however, it is difficult to produce high-performance graphene material on an industrial scale and at a low cost, which is an obstacle to its industrial application. Our method is advantageous for the production of graphene material in terms of simplicity and high production volumes.

Methods such as the intercalation of small molecules or polymers followed by the application of ultrasound require long processing times. These methods are:
1. Chemical methods. Through the expansion of graphene using high temperatures and potassium permanganate, which is a dangerous method that requires very abrasive conditions, in addition to needing a post-production method. Through the oxidation and subsequent reduction of graphene, which is widely used today but entails very high costs.
2. Silicon carbide (SiC) sublimation.
3. Chemical vapor deposition (CVD) on metal surfaces.

There are other, more recent and sophisticated alternatives that are very experimental techniques and do not, at present, result in high-quality graphene on an industrial scale at a low cost, which represents the main limitation for most applications, such as:
- Calcination of aluminium sulphide in the presence of carbon monoxide and argon. The reaction between CO and Al₂S₃ produces aluminium oxide and graphene.
- Use of magnesium in dry ice (CO₂).
- Pyrolysis of sodium and ethanol: graphene is obtained by heating sodium and ethanol at a 1:1 molar ratio. The product of this reaction is then pyrolyzed and produces a material consisting of several layers of graphene.

In most of the patented methods for synthesizing graphene, the process begins with the intercalation of graphite particles by means of an appropriate agent followed by thermal expansion. This way, the evaporation of the intercalated particles produces the exfoliation of the sheets of the material. In some cases, the product obtained is subjected to mechanical exfoliation or ultrasonication to achieve a greater exfoliation of the product.

In addition, there are different types of grinding systems. Grinding methods are well known since antiquity, and can be classified according to the type of grinding intended to be achieved:
- Course. By means of disc, hammer or blade mills.
- Medium. By means of a micro-hammer mill, Grindomix, etc.
- Fine. By means of a ball mill, Jet mill, ultracentrifuge.

And can also be classified according to the types of forces that are required to reduce size:
- Pressure or friction. By means of beater mills, cylinder finishing machines and presses.
- Cut. By means of toothed roll or disc mills.
- Shock and compression. By means of centrifugal mills, planetary mills and cross-beater mills.

### DESCRIPTION OF THE INVENTION

This specification describes a method of obtaining a graphene product and the use thereof, the method being based on thermal mechanical exfoliation of graphite by means of a specifically designed self-rotating screw and balls of material with defined dimensions, the screw being inserted into a leaktight chamber having a controlled environment. The graphite and balls are rotated dry, and the exfoliation of the graphite by means of the balls takes place at a temperature from 450 to 550°C inside the leaktight chamber and at 900 to 1,000 rpm of the self-rotating screw, obtaining surface areas from 300 m²/g to 600 m²/g of graphene material, which graphene material is extracted and filtered by means of a continuous vacuum system to select pure homogenous graphene material, which makes it possible to obtain a production of graphene material in quantities, qualities and production times per process of less than 45 minutes and 30 minutes on average.

The exfoliation method takes place due to the rotational motion of the entire mass, including the graphite and balls, which balls, made of zirconium oxide stabilized with yttrium, have specific dimensions of approximately 0.8 mm. in diameter and acquire significant centrifugal force on the internal walls of the leaktight chamber and reach ideal internal temperatures so that graphite exfoliation takes place in this zone at nanometric level. The geometry and revolutions of the self-rotating screw are crucial to obtain these conditions, given they make it possible to move the entire mass, generate the thermodynamic conditions such as temperature and pressure required in the leaktight exfoliation chamber and at the same time prevent the particles of the graphene product from breaking.

To the extent this is a thermal mechanical exfoliation process, during extraction the graphene product can contain samples of nanographite materials and/or impurities, due to which a filtration and extraction system has been designed which selects the pure homogeneous product by means of a vacuum extraction system, which comprises a vacuum pump and a vacuum tank. The leaktight chamber has a pressure and a temperature sensor and the vacuum tank has a vacuum pressure sensor with the corresponding valves and nanometric filters, so that, given the leak-tightness and pressure conditions at the leaktight exfoliation chamber and the controlled pressure gradient that can be generated with the vacuum pump, between the leaktight exfoliation chamber and the vacuum tank, the pure homogeneous graphene material, called graphene product, can be extracted.

Thanks to this vacuum filtration and extraction method, a high-quality graphene material can be obtained with the capacity to select it by particle size, which provides different qualities and different fields of application. For example, in the case of conductive paints, particle size and product homogeneity play an essential role in the uniform application thereof in different polymers to improve their mechanical properties and obtain high-performance polymers with a broader range of uses in several applications. It is also a non-polluting and eco-friendly system that does not require the use of chemical agents (such as surfactants, organic intercalants, acids or bases) nor subsequent treatment.

It should be noted that since it is a mechanical and thermal principle, and the fundamental parameters of the exfoliation process have been identified, we can say that this system is scalable and eco-friendly from every standpoint.

The graphene material can be immersed into a matrix, from 0.1 to 25% by weight, to form a composite material with a controlled and defined structure.

The graphene material can be used for paints; for preparing composite polymeric, ceramic or metal materials, which can be organic polymeric compounds (biocomposites, cellulose, thermoplastic or thermostable materials) or inorganic (silicones); in metal coating processes (stamping, microstamping, etc.); in biomedicine; in the treatment of polluted water and soil; in textile materials; in electrodes; in capacitors; in conductive inks; and in batteries or cells by adding percentages of 0.5 to 20% by weight depending on the application to improve some of their physical or chemical properties. It can even be used as a substitute for widely used additives, with the advantage of not being as polluting and being more sustainable than carbon black.

It can also be used in the recycling of thermoplastic polymers where the graphene material maintains the properties of the matrix and even reinforces them.

To supplement the description made below, and in order to aid a better understanding of the characteristics of the invention, this specification is accompanied by a set of drawings, which figures represent the most characteristic details of the invention in an illustrative rather than limiting manner.

### BRIEF DESCRIPTION OF THE DESIGNS

Figure 1. Shows an isometric view of the method of obtaining the graphene product by representing the leaktight chamber in which the self-rotating screw has been inserted, attached to a motor by its shaft, as well as the vacuum tank and the vacuum pump with the corresponding sensors and filters.
Figure 2. Shows an elevational view of the previous figure representing the design of the self-rotating screw housed in the leaktight chamber and attached to a motor, as well as the remaining components.
Figure 3. Shows an image of the graphene material after compaction for characterization in RAMAN spectroscopy.
Figure 4. Raman spectrum showing the average mapping measurement of the previous image (Fig. 3).
Figure 5. Elemental analysis of our graphene material.
Figure 6. SEM image of our graphene material.
Figure 7. TEM image of our graphene material

### DESCRIPTION OF A PREFERRED EMBODIMENT

The present invention provides a simple thermal mechanical exfoliation method for producing different qualities of graphene powder, with quality being understood as the number of layers of the material of a thickness of less than 200 nm.

This method is based on a thermal mechanical exfoliation of the graphite by means of a specifically designed self-rotating screw 2 and balls of material with defined dimensions, the screw 2 being inserted into a leaktight chamber 1 by means of a mechanical seal and which temperature and pressure are controlled by means of thermal and pressure sensors 2. The graphite and balls are rotated dry.

The exfoliation method takes place due to the rotational motion of the entire mass, including the graphite and balls, which balls, made of zirconium oxide stabilized with yttrium, have specific dimensions of 0.8 mm. in diameter and acquire significant centrifugal force on the internal walls of the leaktight chamber 1 and reach ideal internal temperatures of 450 to 550°C, so that graphite exfoliation takes place in this zone at nanometric level. To obtain these conditions, the geometry the screw 2 has been designed such that it consists of a cross-shaped finger system with different levels.

The separation of the levels, as well as the separation between the diameter of the screw and the diameter of the leaktight chamber 1, have been determined to allow them to fulfil their function, the screw 2 being housed inside the cylindrical leaktight chamber 1 with a round base containing the graphite to be exfoliated, which has previously been fed by the hopper 9.

In addition, the shaft of the screw 2 extends through one of its ends towards an external motor 8, passing through the cover of the leaktight chamber 1, where a mechanical seal 10 is provided between the shaft of the screw 2 and the body of the cover of the leaktight chamber 1 to keep it leaktight.

The product inlet and outlet valves are likewise located on the cover of the leaktight chamber 1, and the shaft of the screw is coupled to the motor element 8 by means of an elastic coupling, allowing the motor 8 to transmit a rotation force of 900 to 1000 rpm to move the entire mass, generate the thermodynamic conditions, such as temperature and pressure, required for exfoliation under graphite conditions, and obtain a graphene material with surface areas ranging from 300 m²/g to 600 m²/g. This graphene material is extracted and filtered by means of a continuous vacuum system for selecting the pure homogeneous graphene product.

To the extent this is a thermal mechanical exfoliation process, during extraction the graphene product can contain samples of nanographite materials and/or impurities, due to which a filtration and extraction system has been designed which selects the pure homogeneous product by means of a vacuum extraction system, which comprises a vacuum pump 3 and a vacuum tank 4, said tank containing a vacuum pressure sensor 7 and the corresponding valves and filters 5. Given the leak-tightness and pressure conditions at the leaktight exfoliation chamber 1 and the controlled pressure gradient that can be generated with the vacuum pump 3, between the leaktight exfoliation chamber 1 and the vacuum tank 4, the pure homogeneous graphene material, called graphene product, can be extracted.

Thanks to this vacuum filtration and extraction method, a high-quality graphene material can be obtained with the capacity to select it by particle size, which provides different qualities and different fields of application. For example, in the case of conductive paints, particle size and product homogeneity play an essential role in the uniform application thereof in different polymers to improve their mechanical properties and obtain high-performance polymers with a broader range of uses in several applications. It is also a non-polluting and eco-friendly system that does not require the use of chemical agents (such as surfactants, organic intercalants, acids or bases) nor subsequent treatment.

Therefore, the present invention provides a simple thermal mechanical exfoliation process by means of vacuum extraction and filtration that makes it possible to produce graphene powder of different qualities. The mechanical exfoliation is carried out as a dry process, providing a graphene mixture of different qualities for different applications, including its use in the preparation of composite materials and sprays applicable to different products.

It has been found that the exfoliation of graphite using a specifically designed self-rotating screw system in a leaktight chamber and controlled thermal conditions is quite effective and a that a material exhibiting a thickness of less than 200 nm and a number of layers that varies from 5 to 10 can be obtained with a vacuum extraction and filtering system applied to the graphene product. The surface area of the material obtained can vary according to the conditions used from 300 m²/gr to 600 m²/gr.

It is worth mentioning that the mechanical stirring taking place in a leaktight chamber, with a range of 500 to 1,000 rpm, reaches high centrifugal forces and temperatures above 400°C inside the tank. Preferably, the graphene production process takes place between 900 and 1,000 rpm by maintaining the working temperature between 450°C and 550°C. These characteristics are essential to the process.

The combination between the controlled stirring and the variation in the revolutions and the temperature makes it possible to obtain graphene of very few layers (5-10), in spectacular times (up to 30 minutes). This method is simple, eco-friendly and allows graphene to be obtained at a low cost, in short periods of time and in sufficient quantities for industrial applications.

This process makes it easy to select surface area, the dimensions of the particles and also obtain a homogeneous product.

With the method of the present invention, the graphene material exhibits characteristic properties that are different from those that can be obtained with other methods. Furthermore, the method as a whole can be optimized to achieve a better final product performance.

It is possible to obtain a material with a very narrow size distribution. In the present invention, the size distribution of the material can be narrowed or kept wider as appropriate. The mechanical exfoliation process applied to the material makes it possible to control the selection of particle size as well.

For example, small particles of graphene or graphene oxide with a narrow size distribution are often used in biomedical applications. To narrow the size distribution in the present invention, depending on the particle size necessary for each application, the invention contemplates the use of centrifugation methods, ultrasound and vacuum systems in the production process.

Once the graphene product is obtained, it can be characterized with one or more of these techniques: X-ray diffraction, RAMAN, surface area analyser (BET), thermal analysis (TGA, DSC, ...), as appropriate to ensure that the necessary requirements for each application are met.

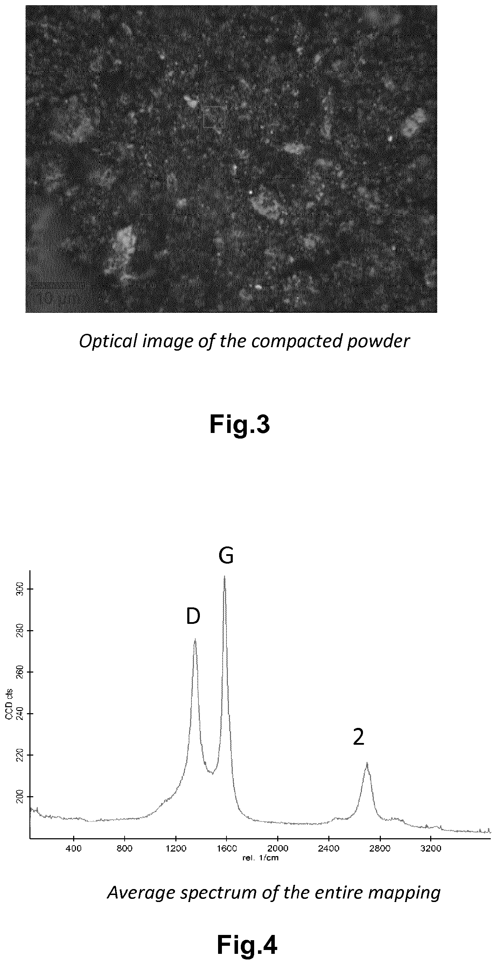

For example, a Raman mapping of a 4x4-micron area was made taking 16x16 spectra with an integration time of 5 seconds at a laser power of 0.2 mW with a 100X lens. The preparation of the sample consisted in the compaction of a few milligrams of powder between two glass coverslips until a smooth surface was obtained. The purpose was to increase laser power in order to reduce the integration time and thus take more points, but the sample burned due to the heat generated by the laser (Fig. 3 and Fig. 4).

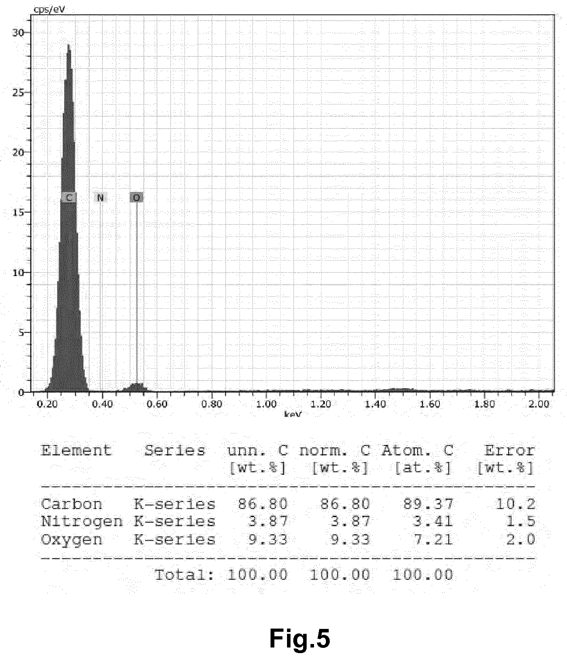

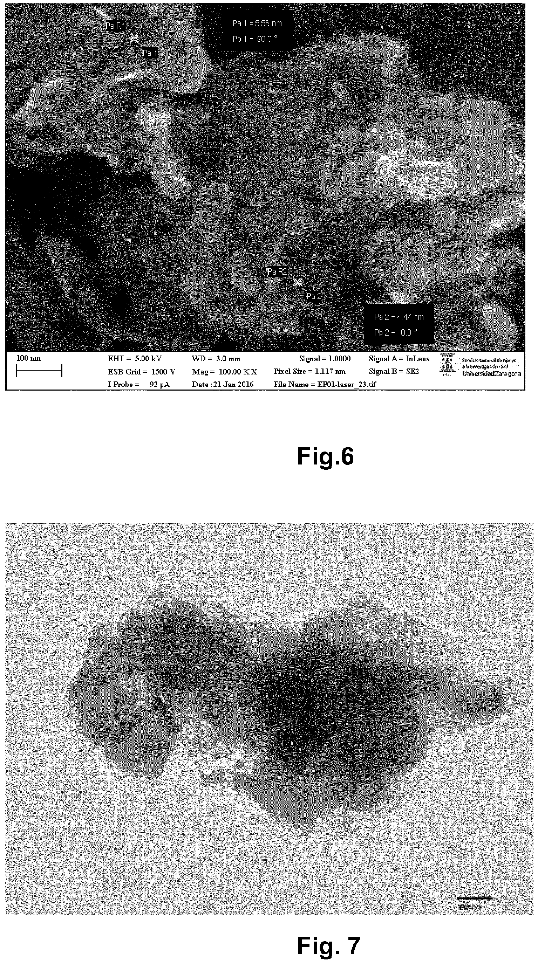

Furthermore, these figures represent the elemental analysis of the samples, which show the purity of our graphene material and the lack of imperfections (Fig. 5). The quality of our product can also be appreciated through the SEM images (Fig. 6), which show the measurements of the graphene layers as being between 4.47 nm and 5.58 nm. Our graphene product can likewise be observed in the TEM images (Fig. 7).

Once the carbon-based nanostructured material is produced by grinding through the mechanical exfoliation of graphite (which can be natural or synthetic), it can be dispersed in a solvent to achieve a stable dispersion or suspension, or it can be mixed with a monomer or polymer to form a composite material with improved mechanical properties, or be functionalized with biocompatible materials for subsequent biomedical applications.

On the one hand the graphene material, when mixed with a plastic resin and an additive, can be the basis for preparing conductive inks for example, inkjet ink.

On the other hand, the composite material achieves its best performance when it has a certain morphological organization, a strict interface control and an appropriate dispersion. These conditions can be achieved with the material and method object of the present invention.

Therefore, it is an object of the present invention to provide a good-quality carbon-based nanostructured material that can be easily dispersed for its application in conductive inks such as inkjet ink, in composite materials, paints, biomedical, batteries, etc.

### TESTS AND APPLICATIONS DEVELOPED.

The works described below are only descriptive and should not be understood as limiting of the present invention.

### Production of graphene by means of a production module, leaktight chamber, self-rotating screws and vacuum extraction and filtering system.

500 gr. of graphite were weighted and inserted into a metal leaktight container. 15,000 zirconium oxide balls stabilized with yttrium, of a size of 0.8 mm in diameter were weighed next. The screw system is maintained at 1,000 rpm and at a controlled temperature between 450°C and 550°C for 30 min. Then, the mixture of balls/material is separated, and the material is extracted by means of a vacuum extraction system to obtain a homogeneous material with a narrow particle size distribution resulting in the desired graphene product.

The carbon content of the samples, as obtained in the manufacturing process, can vary from 85 to 95% of C and the rest is mostly O, as shown in Figure 5. (Elemental analysis of our graphene material).

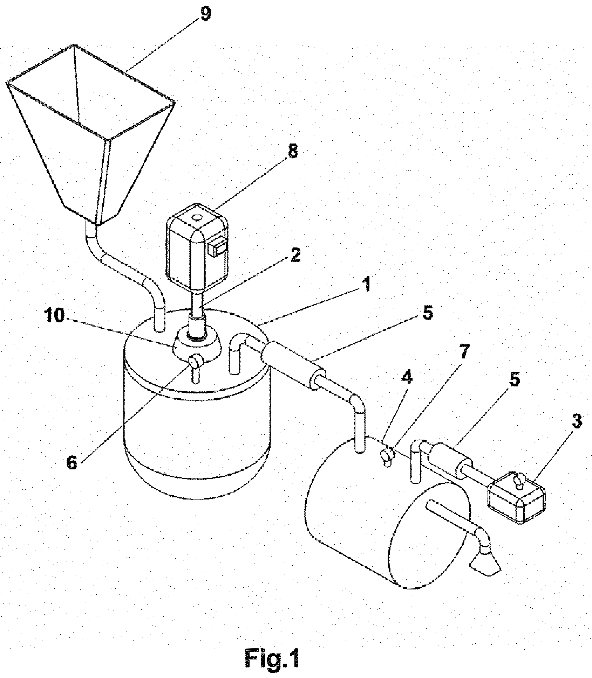

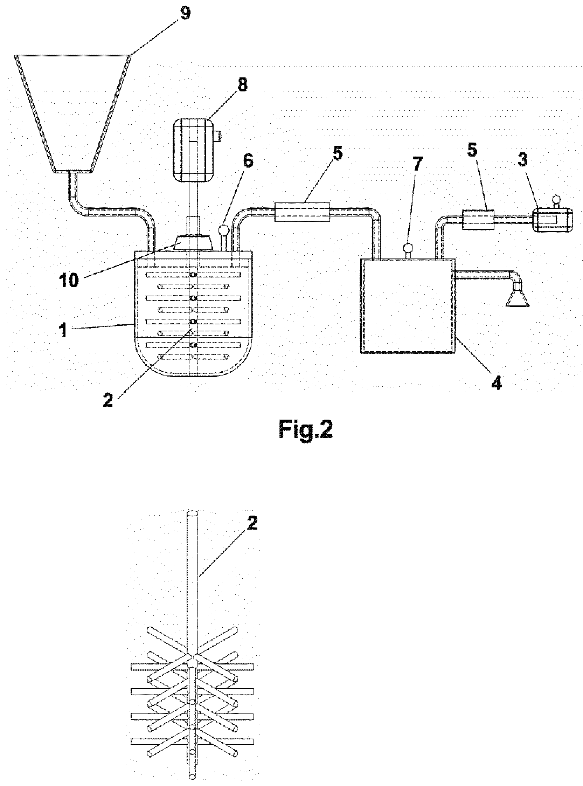

The components and elements used for this test, the leaktight chamber, the self-rotating screws and the vacuum extraction system object of the present invention are illustrated in figures 1 and 2.

### Application tests of the graphene material obtained.

**Masterbatch.** The masterbatch is prepared by adding 1,980 g of polypropylene (PP) and 20 g of multilayer graphene with a surface area of 500 m²/g (matrix/graphene ratio: 99/1) in a co-rotating twin-screw extruder with two feeders to achieve a homogeneous mixture at a temperature of 230°C with a uniform extrusion rate. The thermoplastic polymer is added to the first feed hopper, and once the plastic is melted, the multilayer graphene is added from the second hopper. The nanomaterial is thus reoriented in the matrix to achieve an appropriate matrix/graphene ratio for obtaining the composite material (masterbatch), which depends on the final application to be achieved. The material takes the shape of the nozzle as it exits through it, due to which it is essential for the material to come out at a uniform speed. In addition, the cooling must be as uniform as possible, since the homogeneity thereof conditions the microstructure of the material.

**Nanocomposite.** 0.2 g of multilayer graphene with a surface area of 500 m²/g are mixed with 19.8 g of epoxy resin (matrix/graphene ratio: 99/1) by mechanical stirring for 1 hour, followed by 1 hour of sonication to obtain a good dispersion. Next, 0.2 g of a catalyst (1% by weight of the epoxy resin) are added and mixed homogeneously by mechanical stirring for 10 minutes. Finally, the mixture is poured into the mould and cured at 60°C for 18 hours.

**Mixture with paraffin.** 100 g of base paraffin wax (C₂₅H₅₂ composition) are melted with 25 g of multilayer graphene (matrix/graphene ratio: 75/25) with a surface area of 500 m²/g, and mechanically stirred until a homogeneous mixture is obtained. The mixture is then poured hot onto the mould and allowed to cool.

**Mixture with paints.** Example of a method for preparing a polyurethane paint at 4% of a graphene mixture with improved hardness properties: 750 mg of multilayer graphene with a surface area of 500 m²/g are dispersed by mechanical stirring in 5 ml of acetone until a homogeneous solution is obtained. Then, 9.36 g of polyurethane paint are added and mechanically stirred. Finally, 4.68 g of a catalyst (base/catalyst ratio: 2/1) are added and stirred again to obtain a good mixture.

The results of the characterization of this type of composite materials indicate that with a good dispersion of the graphene mixture in the paraffin, in the paint in the polymer matrix or the polymer, the system has one or more improved properties.

These improved properties can range between improvements in thermal conductivity, improvements in electrical conductivity, greater scratch resistance, greater deformation resistance, greater chemical resistance, hydrophobic properties, greater lubricating power, improved hiding power, reduced weight, etc.

## Claims

1. **A METHOD FOR OBTAINING A GRAPHENE PRODUCT**, said method being based on thermal mechanical exfoliation of graphite by means of a specifically designed self-rotating screw and balls of material with defined dimensions, the screw being inserted into a leaktight chamber having a controlled environment and the graphite and balls being rotated dry, **characterized in that** the exfoliation takes place at a temperature from 450 to 550°C inside the leaktight chamber (1) and at 900 to 1,000 rpm of the self-rotating screw (2), obtaining surface areas from 300 m²/g to 600 m²/g of graphene material, which graphene material is extracted and filtered by means of a continuous vacuum system to select pure homogenous graphene material, which makes it possible to obtain a production of graphene material in quantities, qualities and production times per process of less than 45 minutes and preferably 30 minutes.

2. **THE METHOD FOR OBTAINING A GRAPHENE PRODUCT** according to claim 1, **characterized in that** the exfoliation process takes place due to the rotational motion of the entire mass, including the graphite and balls, which balls, made of zirconium oxide stabilized with yttrium, have specific dimensions of approximately 0.8 mm. in diameter and acquire significant centrifugal force on the internal walls of the leaktight chamber (1), the zone where the graphite exfoliation takes place at nanometric level, the geometry and revolutions of the self-rotating screw (2) being crucial to obtain these conditions, given they make it possible to move the entire mass, generate the thermodynamic conditions such as temperature and pressure required in the leaktight exfoliation chamber (1) and at the same time prevent the particles of the graphene product from breaking.

3. **THE METHOD FOR OBTAINING A GRAPHENE PRODUCT** according to claims 1 and 2, **characterized in that** the graphene product can contain samples of nanographite materials and/or impurities, during its extraction and filtering from the leaktight chamber (1) a pure homogeneous product is selected by means of a vacuum pump (3) and a vacuum tank (4), the leaktight chamber (1) having a pressure and a temperature sensor (6) and the vacuum tank (4) having a vacuum pressure sensor (7) and the corresponding valves and nanometric filters (5), such that given the leak-tightness and pressure conditions at the leaktight exfoliation chamber (1) and the controlled pressure gradient that can be generated with the vacuum pump (3), between the leaktight exfoliation chamber (1) and the vacuum tank (4), the selected graphene material is extracted.

4. **GRAPHENE PRODUCT** according to the method of the claims 1 to 3, **characterized in that** since it is a non-polluting and eco-friendly system, the graphene product obtained with surface areas ranging from 300 m²/g to 600 m²/g does not require the use of chemical agents (such as surfactants, organic intercalants, acids or bases) nor subsequent treatment.

5. **A USE** according to the method of claims 1 to 3 and the product of claim 4 in paints; for preparing composite polymeric, ceramic or metal materials, which can be organic polymeric compounds (biocomposites, cellulose, thermoplastic or thermostable materials) or inorganic (silicones); in metal coating processes (stamping, microstamping, etc.); in biomedicine; in the treatment of polluted water and soil; in textile materials; in electrodes; in capacitors; in conductive inks; and in batteries or cells by adding percentages of 0.5 to 20% by weight depending on the application to improve some of their physical or chemical properties, as well as a substitute for additives to the extent it is less polluting, and in the recycling of thermoplastic polymers, where the graphene material maintains the properties of the matrix and even reinforces them.
